# EUROPÄISCHE PATENTSCHRIFT

(11) **EP 0 517 088 B1**
(45) Veröffentlichungstag und Bekanntmachung des Hinweises auf die Patenterteilung: **17.04.1996**
(21) Anmeldenummer: 92108932.2
(22) Anmeldetag: 27.05.1992
(51) Int. Cl.: F16J 15/20

(54) **Verfahren zur Herstellung von Ringen aus Reingraphitfolien und nach dem Verfahren hergestellte Ringe**
Method for making rings of pure graphite films and rings produced therefrom
Procédé de fabrication d'anneaux en feuilles de graphite pur et anneaux ainsi fabriqués

(30) Priorität: 05.06.1991 DE 4118446
(43) Veröffentlichungstag der Anmeldung: 09.12.1992
(73) Patentinhaber: DITEC MARKETING AG, CH-9000 St. Gallen (CH)
(72) Erfinder: Genthe, Günther, W-8011 Heimstetten (DE)
(74) Vertreter: Reinhard - Skuhra - Weise & Partner

(56) Entgegenhaltungen:
- EP-A- 0 237 321
- DE-A- 3 317 717
- US-A- 3 955 673
- US-A- 4 068 853

## Beschreibung

Die Erfindung betrifft ein Verfahren gemäß dem Oberbegriff des Patentanspruchs 1 sowie einen Ring aus mehreren konzentrisch aufgewickelten Lagen aus Graphitfolienbändern gemäß dem Oberbegriff des Patentanspruchs 5.

Ein Verfahren gemäß dem Oberbegriff des Patentanspruchs 1 sowie ein Ring gemäß dem Oberbegriff des Patentanspruchs 5 waren bereits vor dem Prioritätstag der Anmeldung allgemein bekannter Stand der Technik.

Bei der Herstellung von Ringen aus Reingraphitfolien, die als Stopfbuchspackungen insbesondere bei Dampfarmaturen Anwendung finden, erfolgt ein konzentrisches Aufwickeln eines Reingraphitfolienbandes auf den Kern einer Preßform, wonach das aufgewickelte Band in Axialrichtung verpreßt wird. Für den Einbau derartiger Ringe ist es häufig erforderlich, die Ringe mit einem Schnitt schräg oder parallel zur Achse des Ringes zu versehen, insbesondere wenn bei Armaturen die Oberteile bzw.

Handräder oder Antriebe im Verlaufe des Auswechselns der Stopfbuchspackungen nicht entfernt werden können. In diesem Fall könnten die Stopfbuchspackungen nicht über das Oberteil bzw. das Handrad oder den Antrieb übergestülpt werden, so daß bei Vorhandensein eines Schnittes der Ring aufbiegbar ist und über die Spindel der Armatur geschoben werden kann. Vor dem Überziehen des Ringes über die Spindel ist nach Vornahme des Schnittes es erforderlich, die Schnittenden in axialer Richtung um eine dem Spindeldurchmesser entsprechende Distanz auseinanderzuziehen. Hierbei werden die Ringe leicht beschädigt, da durch ein Auseinanderziehen die einzelnen Folienlagen sich lösen können, der Ring zerfällt und nicht mehr verwendbar ist.

Der Erfindung liegt die Aufgabe zugrunde, ein Verfahren der eingangs genannten Art sowie einen dadurch hergestellten Ring soweit zu verbessern, daß ein Zusammenhalt des Ringes nach Vornahme des Schnittes und dem erforderlichen Aufbiegen gewährleistet ist.

Diese Aufgabe wird erfindungsgemäß durch die Merkmale im Patentanspruch 1 sowie im Patentanspruch 5 gelöst.

Weitere Ausgestaltungen des Verfahrens ergeben sich aus den Unteransprüchen.

Ein mit dem erfindungsgemäßen Verfahren hergestellter Ring zeichnet sich dadurch aus, daß bei der Verpressung eine in Radialrichtung des zu pressenden Ringes erfolgende Verlagerung der Graphitfolienbänder innerhalb vorgegebener Grenzen hervorgerufen wird, die zu einer Z-oder mehrfach Z-förmigen Faltung der aus den Graphitfolienbändern gebildeten Schichten führt.
Mit dem erfindungsgemäßen Verfahren hergestellte Ringe aus Reingraphitfolien weisen zum einen an den Schnittenden keine Überstände, Schnittkanten oder andere Unebenheiten auf.

Gemäß der Erfindung wird dies dadurch erreicht, daß nach der Vornahme des Schnitts ein zweiter Verpreßvorgang durchgeführt wird und der erste Preßvorgang derart durchgeführt wird, daß das zu pressende Material in Radialrichtung verlagert wird, wodurch sich eine im wesentlichen Z-oder mehrfach- Z-förmige Verlagerung des Materials und damit eine innige Bindung der einzelnen Schichten ergibt. Diese Z-förmige Materialverlagerung hat zur Folge, daß eine wabenähnliche Struktur innerhalb des Ringes erhalten wird, wenn der Ring nach Beseitigung von Teilschichten im Profil betrachtet wird. Diese wabenförmige Struktur hat eine innige Verbindung der einzeln aufgebrachten Folienschichten zur Folge und verhindert ein Lösen der Schichten beim Aufbiegen des Ringes zum Zwecke des Aufschiebens auf die Spindel einer Armatur o. dgl.

Im folgenden wird die Erfindung anhand der Zeichnungen zur Erläuterung weiterer Merkmale beschrieben.
Es zeigen:
- Fig. 1: eine schematische halbe Schnittansicht einer Preßform zur Verwendung bei dem erfindungsgemäßen Verfahren,
- Fig. 2: eine teilschematische Ansicht zur Erläuterung der Verformung der Folien,
- Fig. 3: eine Aufsicht auf ein Folienband zur Erläuterung einer bevorzugten Ausführungsform einer Riffelung, und
- Fig. 4a: eine Teilansicht zur Erläuterung der Waben- bzw. Rautenstruktur der verpreßten Folie im Ringinneren, und
- Fig. 4b: eine Teilansicht eines Ringes zur Verdeutlichung der Strukturierung der Ring- Außenfläche mit Knickfalten.

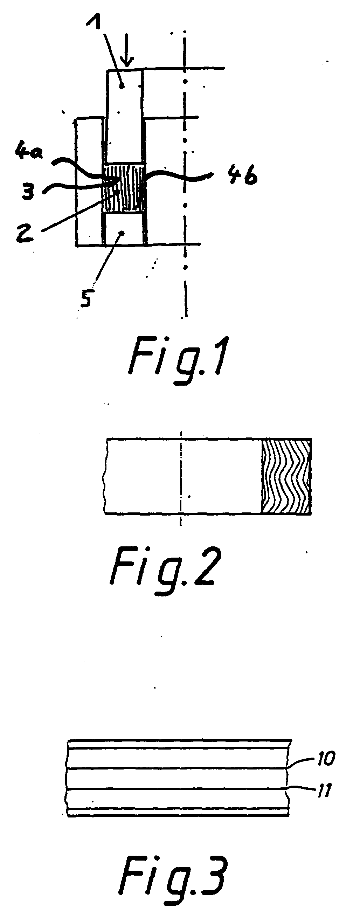

Bei der Herstellung von Ringen aus Reingraphitfolien wird erfindungsgemäß die Folie in Form eines Bandes auf einen Kern einer Preßform aufgewickelt. Anschließend erfolgt ein Preßvorgang derart, daß in Axialrichtung des aufgewickelten ringförmigen Körpers ein Preßstempel 1 verfahren wird, der auf den ringförmigen Körper 2 aus lose aufgewickelten Graphitfolienbändern wirkt. Hierbei wird der ringförmige Körper 2 in einen Preßraum 3 derart eingelegt, daß seitliche Abstände zwischen dem ringförmigen Körper 2 und der Preßform verbleiben, die in Fig. 1 durch das Bezugszeichen 4a, 4b angedeutet sind. Der ringförmige Körper 2 liegt auf einem Gegenstück 5 auf. Durch das Herabsenken des Preßstempels 1 wird nicht nur das Material des lose aufgewickelten ringförmigen Körpers 2 zusammengepreßt, sondern auch quer zur Axialrichtung, d.h. in Radialrichtung des Körpers verlagert und verpreßt, wodurch die Folien bzw. die durch die Folien gebildeten Schichten in zickzackförmiger Struktur verlagert werden, wie dies in Fig. 2 angedeutet ist. Diese zickzack- oder Z-förmige Struktur, die auch als Z-förmige Faltung bezeichnet werden kann, ergibt sich aufgrund der Tatsache des Vorsehens von ringförmigen Freiräumen 4a, 4b innerhalb der Preßform, wohingegen bei Nichtvorhandensein solcher Räume die in Fig. 2 gezeigte Struktur nicht erreicht würde.

Nach dem Verpressen gemäß Fig. 1 wird der hierdurch hergestellte Ring mit einem Schnitt versehen, der parallel oder schräg liegt zur Achse des Ringes, woraufhin der Ring erfindungsgemäß um eine dem Ring-Innendurchmesser entsprechende Distanz aufgebogen wird, um die Schnittenden in Axialrichtung des Ringes auseinanderzuziehen. Nach dem Auseinanderziehen des geschnittenen Ringes wird der Ring nochmals in die Preßform eingelegt und einem zweiten Preßvorgang unterworfen, wodurch aufgrund des Schnittes entstandene Schnittkanten oder andere Unebenheiten beseitigt werden. Durch den zweiten Preßvorgang wird der durch das Aufziehen in Form des Verbiegens der beiden Schnittenden gelockerte Ring wieder verfestigt, so daß der Ring aus Reingraphit anschließend ohne Gefahr einer Lösung der einzelnen Folienschichten über die Spindel der betreffenden Armatur geschoben werden kann und in die Armatur als Stopfbuchspackung eingesetzt werden kann.

Wesentlich ist, daß die Folien aus expandiertem Graphit während des ersten Preßvorganges hinreichend weit sich in Radialrichtung verlagern können, wodurch sich eine innige Verbindung zwischen den einzelnen Folienschichten ergibt und nach Vornahme des Schnitts ein zweiter Preßvorgang durchgeführt wird, der zur weiteren Festigkeit des bereits geschnittenen gesamten Ringes führt unter Beseitigung der durch den Schnitt hervorgerufenen Schnittkanten oder anderen Unebenheiten. Der zweite Preßvorgang bewirkt ein Verfestigen des durch das Aufziehen nach Vornahme des Schnitts gelockerten Rings.

Gemäß der Erfindung werden Folien mit einer Stärke von etwa 0,5 bis 0,35 mm vorzugsweise verwendet, deren Breite etwa dem 1,3 bis 3,0-fachen der späteren Ringhöhe entspricht. Zur Herstellung solcher Folien werden Folien mit beispielsweise 50 cm oder 100 cm Breite benutzt, die mittels einer Drehbank mit einem Messer in die vorgenannte Breite geschnitten werden.

Es ist bekannt, derartige Folien vor dem Aufwickeln mit Querriffelung zu versehen, um den Zusammenhalt der Wickellagen zu verbessern. Erfindungsgemäß kann eine derartige Querriffelung durch eine Walze erzeugt werden, die mit parallel zur Walzenachse verlaufenden erhabenen Bereichen versehen ist, bevor das Folienband auf den Preßkern aufgewickelt wird. Erfindungsgemäß wird entweder anstelle einer solchen Querriffelung oder zusätzlich zur Querriffelung eine Längsriffelung vorgesehen, d.h. eine beispielsweise durch zwei Linien gebildete Riffelung 10, 11 (Fig. 3), die als Sollknickstellen beim ersten Preßvorgang wirken und die in Fig. 2 gezeigten Spitzen vorzugsweise oder ausschließlich im Bereich der Linien 10, 11 erzeugen lassen. Diese Riffelung oder strichförmige Vertiefung in den Folien gemäß den Linien 10, 11 in Fig. 3 wird gleichfalls durch eine Walze erzeugt, welche die Folienbänder vor dem Aufwickeln auf den Preßstempel beaufschlagt.

Bei Folien mit einer Stärke von 0,5 mm werden vorzugsweise solche mit einem Raumgewicht von 0,7 g/cm³ und bei einer Stärke von 0,35 mm solche mit einem Raumgewicht von 1,0 g/cm³ verwendet.

Der Preßvorgang erfolgt entweder anschlagabhängig, d.h. der Preßstempel wird in Richtung auf einen Anschlag mit vorgegebenem Preßdruck vorgeschoben, oder materialabhängig im Bezug auf vorgegebene spezifische Preßdruckwerte.

Die erfindungsgemäß hergestellten Ringe aus Reingraphit weisen im Schnitt betrachtet einen Faltenverlauf auf, der in Umfangsrichtung schräg zur Ringebene verläuft sowie parallel zur Stirnfläche, wodurch ein im wesentlichen Z-förmiger oder mehrfach Z-förmiger Faltenverlauf gebildet ist, der eine wabenförmige Struktur ergibt.

Ein derart hergestellter Ring aus Reingraphit läßt sich bei praxisgerechter Handhabung nach Vornahme des Schnitts auseinanderbiegen, ohne daß der Schichtenverbund gelöst wird.

Gemäß einer bevorzugten Ausführungsform der Erfindung wird das Folienband vor dem ersten Verpressen mit einem Trockengleitmittel beschichtet, beispielsweise Pudergraphit, Talkum oder Bornitrid. Durch derartige Oberflächenbehandlung wird die Verschiebbarkeit der Folienlagen gegeneinander verbessert ohne Reduzierung der Dichtwirkung oder der thermischen Beständigkeit des fertigen Ringes.

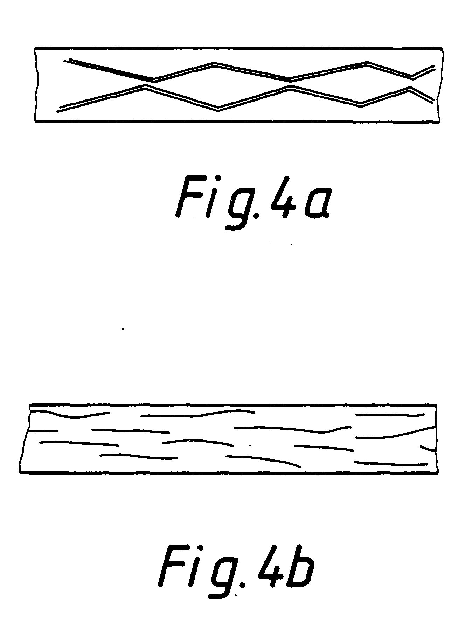

Die bei einem derart hergestellten Ring gebildete Folienstruktur ist in Fig. 2 und Fig. 4 veranschaulicht. Es ist ersichtlich, daß durch eine Faltung gemäß Fig. 2 und Fig. 4 der Zusammenhalt der einzelnen Folienlagen gegeneinander verbessert wird.

## Patentansprüche

1. Verfahren zur Herstellung von Ringen aus Reingraphitfolien, bei dem ein Graphitfolienband auf dem Kern einer Preßform konzentrisch aufgewickelt und anschließend in Axialrichtung verpreßt wird, wonach ein schräger oder parallel zur Axialrichtung liegender Schnitt vorgenommen wird,
**dadurch gekennzeichnet**,
daß bei der Verpressung eine in Axial- und Radialrichtung des zu pressenden Ringes erfolgende Verlagerung der einzelnen Lagen des Graphitfolienbandes innerhalb vorgegebener Grenzen hervorgerufen gerufen wird, die zu einer Z-oder mehrfach Z-förmigen Faltung der aus den Graphitfolienbändern gebildeten Schichten führt,
daß nach der Herstellung des Schnitts durch den gepreßten Ring die Schnittenden vorzugsweise um einen etwa dem Ringinnendurchmesser entsprechenden Betrag in Axialrichtung auseinandergezogen werden, und daß der Ring anschließend einem zweiten Preßvorgang ausgesetzt wird.

2. Verfahren nach Anspruch 1,
**dadurch gekennzeichnet**,
daß die Folienbänder aus Reingraphit vor dem ersten Verpressen mit einem Trockengleitmittel, einem Schmiermittel oder einer anderen gelösten, dispergierten oder emulgierten Substanz oberflächenbehandelt werden.

3. Verfahren nach Anspruch 1 oder 2,
**dadurch gekennzeichnet**,
daß die Folienbänder vor dem Verpressen mit mindestens einer senkrecht zur Axialrichtung verlaufenden Riffelung versehen werden.

4. Verfahren nach wengistens einem der vorangehenden Ansprüche,
**dadurch gekennzeichnet**,
daß die Folienbänder vor dem ersten Verpressen in bekannter Weise mit Querriffelungen versehen werden.

5. Ring, bestehend aus mehreren konzentrisch aufgewickelten Lagen aus Graphitfolienbändern, die nach konzentrischer Aufwicklung verpreßt wurden,
mit einem parallel oder schräg zur Axialrichtung verlaufenden Schnitt,
**dadurch gekennzeichnet**,
daß die konzentrisch aufgewickelten Lagen nach Vornahme des Schnitts nochmals verpreßt wurden, und
daß die einzelnen Schichten im Querschnitt etwa Z-förmigen Verlauf mit Bereichen aufweisen, die in Radialrichtung sowie parallel zur Achse ausgerichtet sind.

6. Ring nach Anspruch 5,
**dadurch gekennzeichnet**,
daß durch den etwa Z-förmigen Verlauf der Schichten eine wabenförmige Struktur definiert ist.

7. Ring nach Anspruch 5 oder 6,
**dadurch gekennzeichnet**,
daß die Graphitfolienbänder eine Stärke von etwa 0,5 bis 0,35 mm aufweisen.

8. Ring nach Anspruch 7,
**dadurch gekennzeichnet**,
daß die Graphitfolienbänder ein Raumgewicht von etwa 0,7 bis 1,0 g/cm³ aufweisen.

## Claims

1. Method for making rings of pure graphite films, in which a graphite film strip is wound concentrically on the core of a compression mould and then compressed in axial direction, after which an oblique cut or one lying parallel to the axial direction is made,
characterised in that
during the compression a displacement of the individual layers of the graphite film strip is brought about within predetermined limits in axial and radial direction of the ring to be compressed, which leads to a Z- or multiple Z-shaped folding of the layers formed from the graphite film strips,
that after the making of the cut through the compressed ring the ends of the cut are pulled apart in axial direction preferably by an amount corresponding roughly to the ring inner diameter, and
that the ring is then subjected to a second pressing operation.

2. Method according to claim 1,
**characterised in that**
the film strips of pure graphite are prior to the first compression surface-treated with a dry sliding agent, a lubricating agent or another dissolved, dispersed or emulsified substance.

3. Method according to claim 1 or 2,
**characterised in that**
the film strips are prior to the compression provided with at least one corrugation running perpendicular to the axial direction.

4. Method according to at least one of the preceding claims,
**characterised in that**
the film strips are prior to the first compression provided with transverse corrugations in known manner.

5. Ring, consisting of several concentrically wound layers of graphite film strips, which are compressed after concentric winding,
with a cut running parallel or obliquely to the axial direction,
**characterised in that**
the concentrically wound layers were compressed again after the making of the cut, and
that the individual layers have in cross-section a roughly Z-shaped pattern, with areas that are aligned in radial direction and also parallel to the axis.

6. Ring according to claim 5,
**characterised in that**
a honeycomb-shaped structure is defined by the roughly Z-shaped pattern of the layers.

7. Ring according to claim 5 or 6,
**characterised in that**
the graphite film strips have a thickness of roughly 0.5 to 0.35 mm.

8. Ring according to claim 7,
**characterised in that**
the graphite film strips have a bulk density of roughly 0.7 to 1.0 g/cm³.

## Revendications

1. Procédé pour la production d'anneaux réalisés en feuilles de graphite pur, dans lequel une bande de feuille en graphite est enroulée de façon concentrique sur le noyau d'une matrice de compression et est ensuite compactée par pressage en direction axiale, puis une coupe en oblique ou parallèle à la direction axiale est effectuée, caractérisé en ce que lors du pressage, un décalage des couches individuelles de la bande de feuille de graphite est engendré à l'intérieur de limites prédéterminées en direction axiale et radiale de l'anneau devant être pressé, en ce que ce déplacement conduit à un plissement en forme de Z ou en forme de Z multiple des couches formées par les bandes de feuille de graphite et en ce que après avoir effectué la coupe à travers l'anneau pressé, les extrémités de coupe sont étirées en direction axiale de préférence d'une valeur correspondant à peu près au diamètre intérieur de l'anneau, et en ce que l'anneau est ensuite exposé à un deuxième processus de pressage.

2. Procédé selon la revendication 1, caractérisé en ce que , avant la première étape de pressage, les bandes de feuille réalisées en graphite pur subissent un traitement de surface avec un agent de glissement sec, un agent de lubrification ou une autre substance dissoute, dispersée ou émulsionnée.

3. Procédé selon la revendication 1 ou 2, caractérisé en ce que avant le pressage, les bandes de feuilles sont munies d'au moins un cannelage qui s'étend verticalement par rapport à la direction axiale.

4. Procédé selon au moins une des revendications précédentes, caractérisé en ce que, avant le premier pressage, les bandes de feuilles sont munies d'une manière connue de cannelages transverses.

5. Anneau comprenant plusieurs couches réalisées en bandes de feuilles de graphite enroulées de façon concentrique, les bandes étant pressées après avoir été enroulées de façon concentrique, avec une coupe qui s'étend en parallèle ou en oblique par rapport à la direction axiale, caractérisé en ce que après avoir effectué la coupe, les couches enroulées de façon concentrique sont encore une fois pressées, et en ce que les couches individuelles présentent en coupe transversale une allure à peu près en forme de Z avec des zones qui sont dirigées en direction radiale ainsi que parallèlement à l'axe.

6. Anneau selon la revendication 5, caractérisé en ce qu'une structure en forme d'alvéole est définie par l'allure à peu près en forme de Z des couches.

7. Anneau selon la revendication 5 ou 6, caractérisé en ce que les bandes de feuilles de graphite présentent une épaisseur comprise entre 0,35mm et 0,5mm.

8. Anneau selon la revendication 7, caractérisé en ce que les bandes de feuilles de graphite présentent un poids spécifique d'environ 0,7 à 1,0g/cm³.
